# EUROPEAN PATENT APPLICATION

(11) **EP 4 483 758 A1**
(43) Date of publication of application: **01.01.2025**
(21) Application number: 24185707.7
(22) Date of filing: 01.07.2024
(51) Int. Cl.: A47C 29/00, A47D 9/00, B62B 9/14, E04H 15/48

(54) **ROTATION MECHANISM, CANOPY STRUCTURE AND CHILD CARRIER**

(30) Priority: 29.06.2023 CN 202310793315
(71) Applicant: Wonderland Switzerland AG, 6312 Steinhausen (CH)
(72) Inventor: WANG, Tao, Dongguan, Guangdong, 523648 (CN)
(74) Representative: Kretschmann, Dennis

(57) **Abstract**

A rotation mechanism (21), a canopy structure (2) with the rotation mechanism (21), and a child carrier with the canopy structure (2) are disclosed. The rotation mechanism (21) includes a rotating base (212) and a fixing base (211). The rotating base (212) is adapted to be connected to the canopy (22) and includes a discal portion (2123) and a connecting rib (2124) disposed on the discal portion (2123). The fixing base (211) is adapted to be connected to the carrier body (1) and includes a fixing base body (2111) and a connecting flange (2113) adapted to be engaged with the connecting rib (2124), and the connecting flange (2113) is connected to the fixing base body (2111). The connecting flange (2113) is provided with an avoiding recess (2114), and the connecting rib (2124) can pass through the avoiding recess (2114) to be engaged with the connecting flange (2113), so that the rotating base (212) is connected to the fixing base (211) and pivotable about a rotation axis (R) relative to the fixing base (211).

## Description

### TECHNICAL FIELD

The present disclosure relates to the technical field of products for children, and in particular, to a rotation mechanism, a canopy structure with the rotation mechanism, and a child carrier with the canopy structure.

### BACKGROUND

The child carrier is generally provided with a canopy structure to better protect the child from direct sunlight or mosquito bites or the like. The canopy structure is at least capable of being switched between a deployed state and a retracted state, so that different use requirements can be satisfied. Conventional canopy structures on the market have some problems such as complex structure, inconvenience in disassembly and assembly, unattractive appearance, etc. And there may be some problems such as high production cost and heavy weight in conventional canopy structures.

### SUMMARY

To solve the above problems, the present disclosure provides a rotation mechanism, a canopy structure with the rotation mechanism, and a child carrier with the canopy structure.

According to a first aspect of the present disclosure, a rotation mechanism for mounting a canopy on a carrier body is provided. The rotation mechanism includes a rotating base and a fixing base. The rotating base is adapted to be connected to the canopy and includes a discal portion and a connecting rib disposed on the discal portion. The fixing base is adapted to be connected to the carrier body and includes a fixing base body and a connecting flange adapted to be engaged with the connecting rib, and the connecting flange is connected to the fixing base body. The connecting flange is provided with an avoiding recess, and the connecting rib is capable of passing through the avoiding recess to be engaged with the connecting flange, so that the rotating base is connected to the fixing base and pivotable about a rotation axis relative to the fixing base.

In the first aspect, the fixing base may further include a boss portion disposed on the fixing base body, and the connecting flange may be disposed on the boss portion.

In the first aspect, the connecting flange may be provided at an end portion of the boss portion configured to be engaged with the discal portion, and the connecting rib may be provided at an end surface of the discal portion configured to be engaged with the fixing base.

In the first aspect, the connecting flange may extend in a plane perpendicular to the rotation axis in a direction away from the rotation axis, and the connecting rib may extend in the plane perpendicular to the rotation axis in a direction towards the rotation axis.

In the first aspect, the connecting rib includes a first connecting rib and a second connecting rib, a size of the first connecting rib in a circumferential direction about the rotation axis may be greater than a size of the second connecting rib in the circumferential direction about the rotation axis, and the avoiding recess may include a first avoiding recess adapted to cooperate with the first connecting rib and a second avoiding recess adapted to cooperate with the second connecting rib.

In the first aspect, a size of the first connecting rib in a radial direction perpendicular to the rotation axis may be less than a size of the second connecting rib in the radial direction perpendicular to the rotation axis. A size of the first avoiding recess in the radial direction perpendicular to the rotation axis may be less than a size of the second avoiding recess in the radial direction perpendicular to the rotation axis.

In the first aspect, the rotating base may be rotatable between a first rotation position and a second rotation position, one of the discal portion and the end surface of the boss portion may be provided with a positioning recess and the other thereof may be provided with a positioning protrusion adapted to cooperate with the positioning recess so that the rotating base may be capable of being locked at least at the first rotation position or the second rotation position relative to the fixing base.

In the first aspect, the discal portion may include a rotating base bottom wall and a rotating base side wall connected to the rotating base bottom wall, the rotating base side wall may be arranged in a circumferential direction around the rotation axis, and the rotating base side wall may be adapted to at least partially surround the boss portion. The rotating base bottom wall may be provided with the positioning protrusion, and the end surface of the boss portion configured to cooperate with the rotating base bottom wall may be provided with the positioning recess.

In the first aspect, the number of the positioning recess may be an integer multiple of the number of the positioning protrusion.

In the first aspect, the boss portion may be provided with a protruding portion protruding parallel to the rotation axis direction, and the protruding portion is formed with the positioning recess.

In the first aspect, the rotating base bottom wall may be provided with a through hole configured to increase elastic deformation of the positioning protrusion.

In the first aspect, the through hole may be closer to the rotation axis than the positioning protrusion.

In the first aspect, one of the fixing base body and the rotating base may be provided with an insertion hole, and the other thereof may be provided with an insertion post adapted to cooperate with the insertion hole.

In the first aspect, the fixing base body may be provided with a connecting recess adapted to at least partially accommodate the carrier body to connect the fixing base to the carrier body.

In the first aspect, the fixing base body may include a first wall portion, a second wall portion disposed opposite to the first wall portion, and a circumferential wall portion connected between the first wall portion and the second wall portion, the first wall portion, the second wall portion and the circumferential wall portion define the connecting recess, the first wall portion extends away from the circumferential wall portion to form an elastic arm, and a side surface of the elastic arm facing the second wall portion is provided with an engaging protrusion.

The carrier body may include a frame tube and a connecting base connected to the frame tube, and when the connecting recess at least partially accommodates the connecting base, the engaging protrusion may be capable of being engaged with the connecting base to detachably connect the fixing base to the carrier body.

In the first aspect, the fixing base body may include a first wall portion, a second wall portion disposed opposite to the first wall portion, and a circumferential wall portion connected between the first wall portion and the second wall portion. The first wall portion, the second wall portion and the circumferential wall portion may be enclosed to form the connecting recess, and a side surface of first wall portion facing the second wall portion is provided with an engaging protrusion, so that when the connecting recess at least partially accommodates a frame tube of the carrier body, the engaging protrusion is capable of being engaged with the frame tube to detachably connect the fixing base to the carrier body.

According to a second aspect of the present disclosure, a canopy structure adapted to be mounted on a carrier body is provided. The canopy structure includes a canopy and a rotation mechanism according to the first aspect. The canopy has a canopy strip. The canopy strip is connected to the rotation mechanism to allow the canopy to be switched between a retracted state and a deployed state.

In the second aspect, the canopy strip may include a first canopy strip, the rotating base may further include a first connecting portion connected to the discal portion and extending in a direction away from the rotation axis, and the first canopy strip may be detachably connected to the first connecting portion.

In the second aspect, the first canopy strip may be rotatable between a first position and a second position relative to the fixing base. When the first canopy strip is at one of the first and second positions, the canopy is in the retracted state, and when the first canopy strip is at the other of the first and second positions, the canopy is in the deployed state.

In the second aspect, the first canopy strip may be rotatable between a first position and a second position relative to the fixing base. When the first canopy strip is at the first position, there may be a maximum angle between a plane where the first canopy strip is located and a plane where a frame tube of the carrier body is located. When the first canopy strip is at the second position, the first canopy strip may be in the same plane as the frame tube of the carrier body.

In the second aspect, the canopy strip may include a first canopy strip and a second canopy strip, the rotating base may further include a first connecting portion connected to the discal portion and extending in a direction away from the rotation axis, and the first canopy strip may be detachably connected to the first connecting portion. The fixing base body of the fixing base may be provided with a second connecting portion extending in a direction away from the rotation axis, and the second canopy strip may be detachably connected to the second connecting portion.

In the second aspect, the first canopy strip may be rotatable relative to the fixing base between a first position with a minimum angle relative to the second canopy strip and a second position with a maximum angle relative to the second canopy strip, and the canopy may have a first side between the first canopy strip and the second canopy strip. When the first canopy strip is at one of the first and second positions, the first side of the canopy is retracted relative to the carrier body, and when the first canopy strip is at the other of the first and second positions, the first side of the canopy is deployed relative to the carrier body.

In the second aspect, the canopy strip may further include a third canopy strip. The fixing base body of the fixing base may be further provided with a third connecting portion extending in a direction away from the rotation axis, an extending direction of the second connecting portion may be angled with an extending direction of the third connecting portion, and the third canopy strip may be detachably and rotatably connected to the third connecting portion.

The third canopy strip may be rotatable relative to the fixing base between a third position with a minimum angle relative to the second canopy strip and a fourth position with a maximum angle relative to the second canopy strip. The canopy may have a second side between the second canopy strip and the third canopy strip.

When the third canopy strip is at one of the third and fourth positions, the second side of the canopy may be retracted relative to the carrier body, and when the third canopy strip is at the other of the third and fourth positions, the second side of the canopy may be deployed relative to the carrier body.

In the second aspect, when the first canopy strip is at the second position, the first canopy strip may be in the same plane as the frame tube of the carrier body, and when the third canopy strip is at the fourth position, the third canopy strip may be in the same plane as the frame tube of the carrier body.

According to a third aspect of the present disclosure, a child carrier is provided. The child carrier includes a carrier body and a canopy structure according to the second aspect. The canopy structure is connected to the carrier body.

### BRIEF DESCRIPTION OF THE DRAWINGS

FIG. 1 is a schematic diagram illustrating a child carrier according to an embodiment of the present disclosure.
FIG.2 is a front view of the child carrier in FIG. 1.
FIG. 3 shows a schematic diagram illustrating a carrier body of the child carrier in FIG. 1, and a partial enlarged view of a connecting base thereof.
FIG. 4 shows a section view of the child carrier along a line A-A in FIG. 2 and a partial enlarged view of a rotation mechanism thereof.
FIG. 5 shows a schematic diagram illustrating a canopy structure according to an embodiment of the present disclosure, and a partial enlarged view of a rotation mechanism thereof.

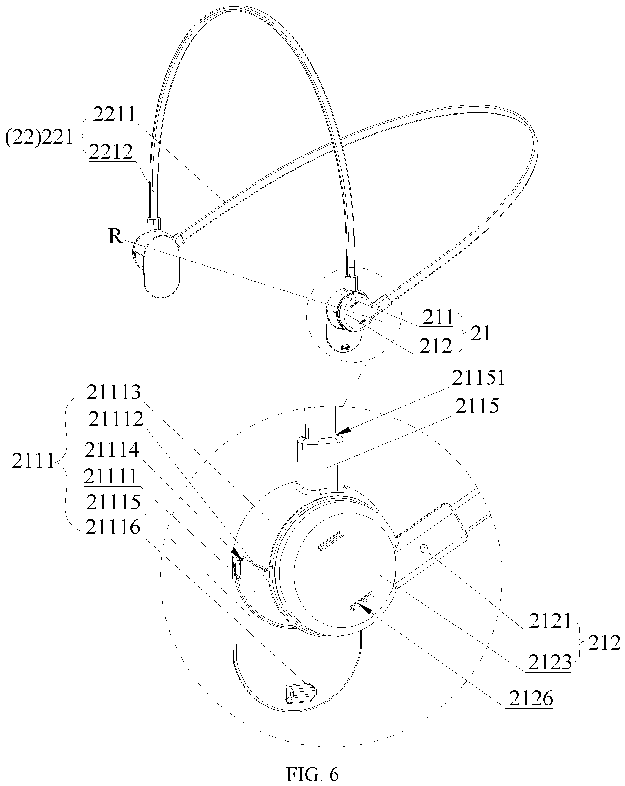

FIG. 6 shows a schematic diagram illustrating a canopy structure according to another embodiment of the present disclosure, and a partial enlarged view of a rotation mechanism thereof.
FIG. 7 is a schematic diagram illustrating a canopy structure according to a further embodiment of the present disclosure, and a partial enlarged view of a rotation mechanism thereof.
FIG. 8 is a front view of the canopy structure in FIG. 5, with the rotating base at a mounting position or at a dismounting position.
FIG. 9 is a top view of the canopy structure in FIG. 8.
FIG. 10 shows a section view of the canopy structure along a line B-B in FIG. 9, and a partial enlarged view of a rotation mechanism thereof.
FIG. 11 is a front view of the canopy structure in FIG. 5, with the rotating base at the first position.
FIG. 12 is a top view of the canopy structure in FIG. 11.
FIG. 13 shows a section view of the canopy structure along a line C-C in FIG. 12, and a partial enlarged view of a rotation mechanism thereof.
FIG. 14 is a front view of the canopy structure in FIG. 5, with the rotating base at the second position.
FIG. 15 is a top view of the canopy structure in FIG. 14.
FIG. 16 shows a section view of the canopy structure along a line D-D in FIG. 15, and a partial enlarged view of a rotation mechanism thereof.
FIG. 17 is a section view of the rotation mechanism of the canopy structure along a line E-E in FIG. 14.
FIG. 18 is a schematic diagram illustrating a fixing base of a rotation mechanism according to an embodiment of the present disclosure.
FIG. 19 is a front view of the fixing base in FIG. 18.
FIG. 20 is a front view of a rotating base of a rotation mechanism according to an embodiment of the present disclosure.

### DETAILED DESCRIPTION

In order to make the above objects, features, and advantages of the present disclosure more obvious and understandable, a detailed description of the specific embodiments of the present disclosure will be provided below in conjunction with the attached drawings. Many specific details are set forth in the following description to facilitate a thorough understanding of this application. However, the present disclosure can be implemented in many other ways different from those described herein, and those skilled in the art can make similar improvements without departing from the spirit of the present disclosure. Therefore, the present disclosure is not limited by the specific embodiments disclosed below.

In the description of the present disclosure, it should be understood that orientations or positional relationships indicated by the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" and the like are based on the orientations or positional relationships shown in the accompanying drawings, and are only for the convenience of describing the present disclosure and simplifying the description, and do not indicate or imply that the referred device or element must have a specific orientation, be constructed and operated in a specific orientation, and therefore should not be understood as a limitation on the present disclosure.

In addition, the terms "first" and "second" are used for descriptive purposes only and should not be understood as indicating or implying relative importance or implicitly indicating the number of the indicated technical features. Therefore, the features defined by "first" and "second" may explicitly or implicitly include at least one of the features. In the description of this application, the "plurality" includes at least two, such as two, three, etc., unless otherwise clearly and specifically defined.

In this application, unless otherwise clearly specified and limited, the terms "mounting", "coupling", "connection", "fixation" and the like should be understood in a broad sense, for example, which can be a fixed connection, a detachable connection, or integrally formed; or which can be a mechanical connection or an electrical connection; or, which can be a direct connection or an indirect connection through an intermediate medium; or, which can be the internal connection of two elements or the interaction relationship between two elements, unless otherwise clearly defined. For one of ordinary skill in this art, the specific meanings of the above terms in this application can be understood according to specific circumstances.

In the present disclosure, unless otherwise clearly specified and limited, a first feature being "above" or "below" a second feature may mean that the first feature and the second feature are in direct contact, or the first feature and the second feature are in indirect contact through an intermediate medium. Moreover, a first feature being "over", "above", and "on the top of" a second feature may mean that the first feature is directly above or obliquely above the second feature, or simply means that the first feature is higher in level than the second feature. A first feature being "under", "below", and "beneath" a second feature may mean that the first feature is directly below or obliquely below the second feature, or simply means that the first feature is lower in level than the second feature.

It should be noted that when an element is referred to as being "fixed to" or "disposed on" another element, it can be directly on the other element or an intermediate element may also be present. When an element is referred to as being "connected" to another element, it can be directly connected to the other element or there may also be an intermediate element. The term "vertical", "horizontal", "upper", "lower", "left", "right" or similar expressions used herein, is for illustrative purposes only and do not represent the unique implementations.

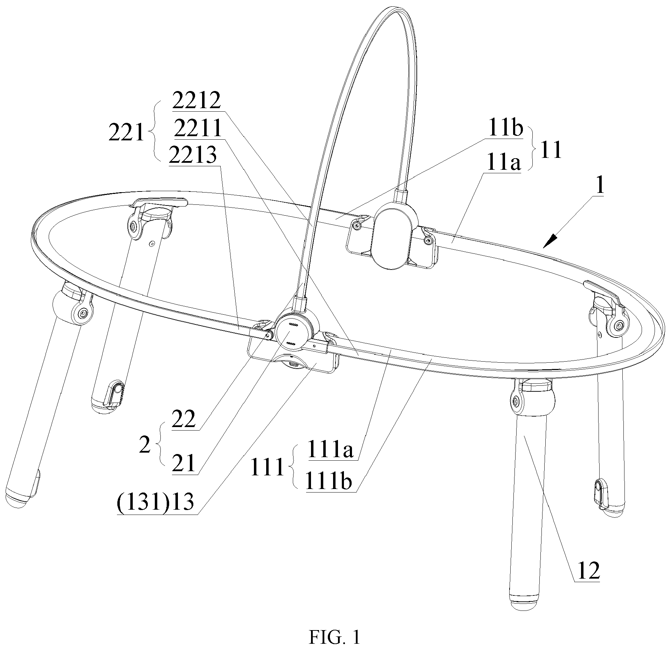

A child carrier is provided according to an embodiment of the present disclosure. As shown in FIGS. 1 to 4, the child carrier includes a carrier body 1 and a canopy structure 2 connected to the carrier body 1. The carrier body 1 may include a child stroller, an infant carrycot, a child safety seat, a child bed, a child swing, or the like. The following will be described by taking the child bed as the carrier body 1.

As shown in FIGS. 1 to 4, the carrier body 1 includes a frame 11 enclosed by a plurality of frame tubes 111 and adapted to be connected to the canopy structure 2, and a plurality of supporting legs 12 connected to the frame 11. The frame 11 includes a first frame 11a and a second frame 11b disposed opposite to the first frame 11a. The first frame 11a is substantially U-shaped or C-shaped, and the second frame 11b is substantially U-shaped or C-shaped. Both ends of the first frame 11a are respectively connected to both ends of the second frame 1 1b to form a closed frame 11. The canopy structure 2 can at least partially cover the open area defined by the frame 11 to protect the child from mosquito bites or direct sunlight or the like. The frame tube 111 includes a curved tube 111b and a straight tube 111a. The first frame 11a includes the curved tube 111b and the straight tubes 111a respectively connected to both ends of the curved tube 111b, and the second frame 11b may have the same structure as the first frame 11a, or may include only the curved tube 111b. Alternatively, the second frame 11b includes the curved tube 111b and the straight tubes 111a connected to both ends of the curved tube 111b respectively, and the first frame 11a includes only the curved tube 111b. The frame 11 enclosed by the curved tubes 111b and the straight tubes 111a is convenient to store, and the curved tubes 111b can prevent the child or the caregiver from being injured or damaged. In other embodiments, the frame 11 may also be a closed structure formed by the end-to-end connection of a single frame tube 111, which is not limited in the present disclosure.

In some embodiments, as shown in FIGS. 1 to 4, the frame 11 is provided with a connecting base 13, and the first frame 11a and the second frame 11b are respectively connected to both ends of the connecting base 13. The canopy structure 2 is connected to the frame 11 through the connecting base 13. In this embodiment, two connecting bases 13 are provided, both ends of the first frame 11a are respectively connected to first ends of the two connecting bases 13, and both ends of the second frame 11b are respectively connected to second ends of the two connecting bases 13. Specifically, both ends of the first frame 11a are pivotally connected to the first ends of the connecting bases 13, and both ends of the second frame 11b are pivotally connected to the second ends of the two connecting bases 13. On the one hand, the first frame 11a and the second frame 11b can be folded and unfolded quickly by the connecting base 13. On the other hand, the canopy structure 2 can be detachably connected to the carrier body 1, so that mounting and removing of the canopy structure 2 can be conveniently and quickly realized. In other embodiments, the connecting base 13 may be used only for the detachable connection between the first frame 11a and the second frame 11b, and the canopy structure 2 is connected to the carrier body 1 at other positions thereof, which is not limited in the present disclosure. In other embodiments, one or more than two connecting bases 13 may be provided, and the number of the connecting bases 13 may be adjusted as needed, which is not limited in the present disclosure. For convenience of description, one of the connecting bases 13 will be described below as an example.

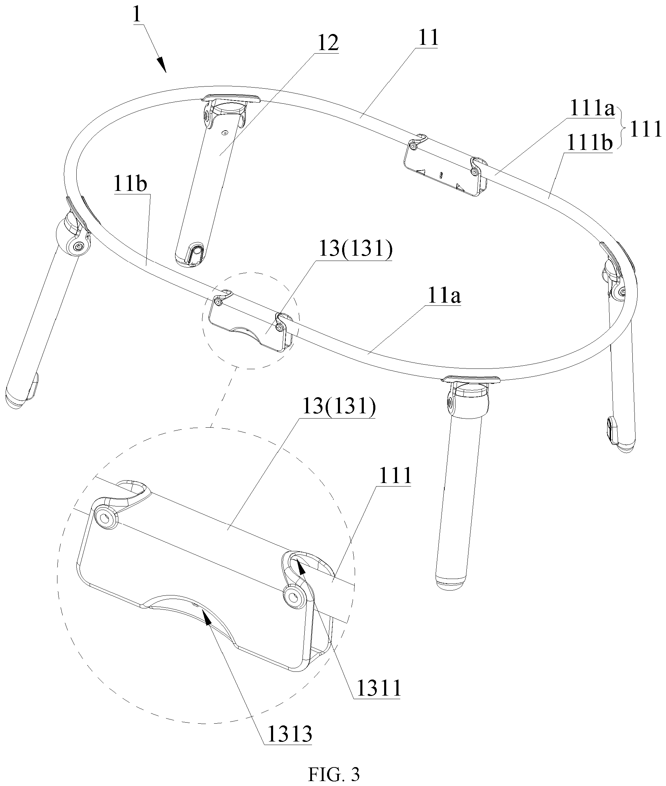

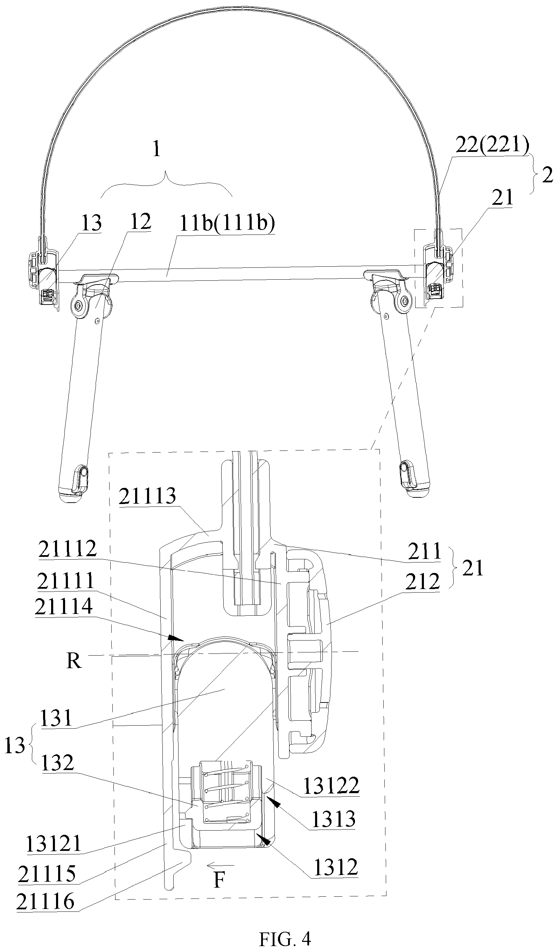

Further, as shown in FIGS. 3 and 4, the connecting base 13 includes a connecting base body 131 and a locking assembly 132 operatively disposed on the connecting base body 131. The connecting base body 131 is substantially in a rectangular block structure, and is provided with an insertion groove 1311. Specifically, two insertion grooves 1311 are provided, and the two insertion grooves 1311 are disposed opposite to each other. An open end of one of the two insertion grooves 1311 faces to left, and an open end of the other of the two insertion grooves 1311 faces to right. The two ends of the first frame 11a and the two ends of the second frame 11b can be in insertion fit with the corresponding insertion groove 1311, respectively. The locking assembly 132 is switchable between a locking state and an unlocking state. When the locking assembly 132 is in the locking state, the two ends of the first frame 11a and the two ends of the second frame 1 1b are respectively limited in the corresponding insertion groove 1311, so that the two ends of the first frame 11a and the two ends of the second frame 11b cannot be disengaged from the corresponding insertion groove 1311. In this case, the first frame 11a and the second frame 11b cannot be pivoted relative to the connecting base body 131, so that the frame 11 cannot be folded. And when the locking assembly 132 is in the unlocking state, both ends of the first frame 11a and both ends of the second frame 11b can be disengaged from the insertion groove 1311. In this case, the first frame 11a and the second frame 11b can be pivoted relative to the connecting base body 131, so that the frame 11 can be folded. The specific structure of the locking assembly 132 is not the focus of the present disclosure and will not described in detail herein. Referring to FIG. 4a, the connecting base body 131 is further provided with an accommodating groove 1312, in which at least a part of the locking assembly 132 can be accommodated. An open end of the accommodating groove 1312 faces down to prevent the child or the caregiver from mistakenly touching the locking assembly 132. The accommodating groove 1312 has a first side wall 13121 and a second side wall 13122 opposite to the first side wall 13121. A lower end portion of the second side wall 13122 forms with a notch 1313, which passes through the second side wall 13122 to facilitate to operate the locking assembly 132 through the notch 1313.

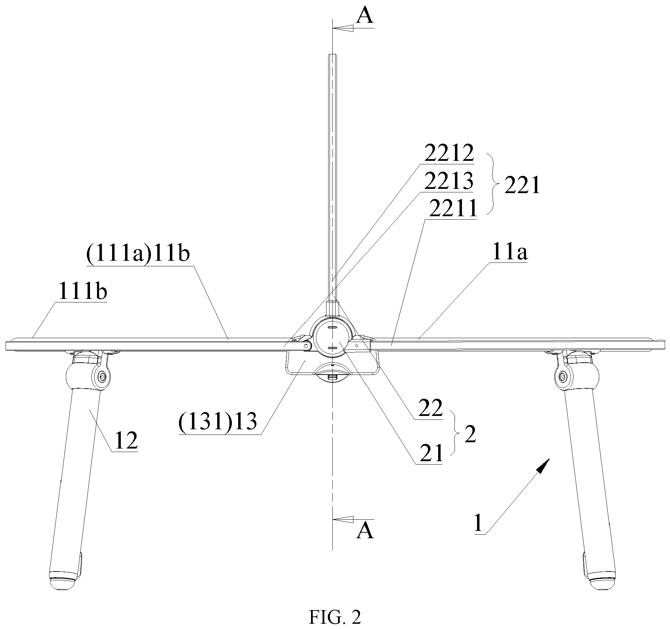

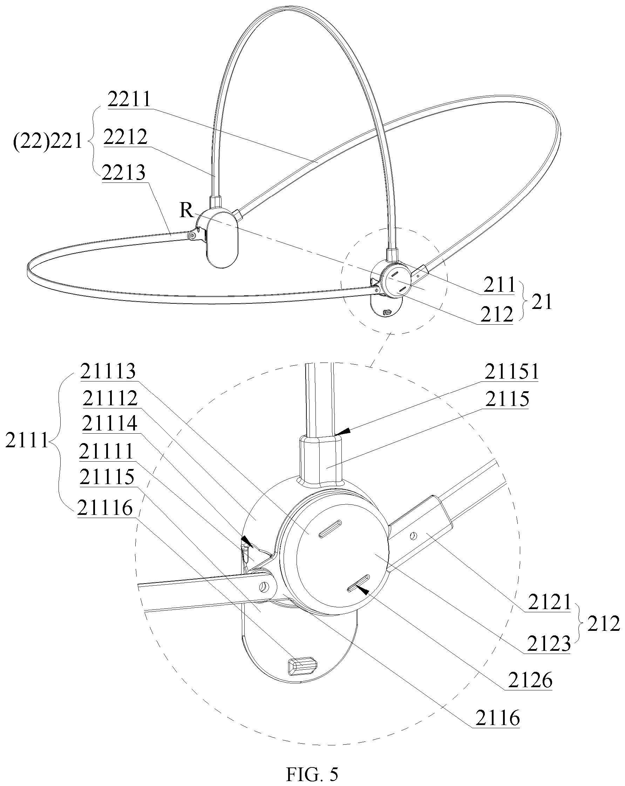

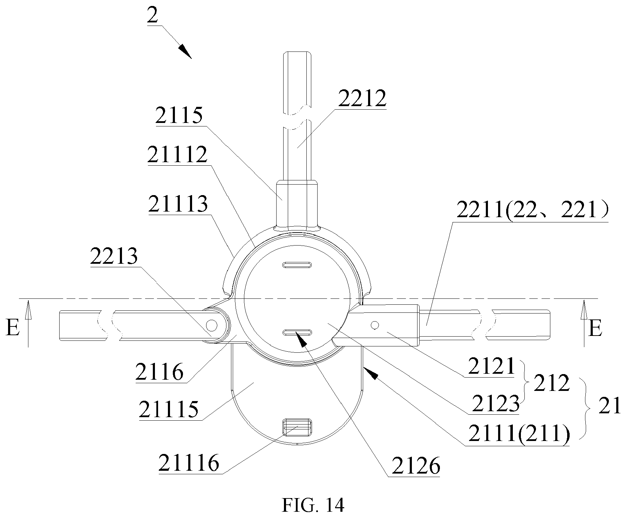

FIGS. 2 and 5 show schematic diagrams illustrating the canopy structure 2 according to an embodiment of the present disclosure. The canopy structure 2 is detachably connected to the connecting base 13. In other embodiments, the canopy structure 2 may also be connected to the frame 11. The first frame 11a and the second frame 11b are located on two sides of the canopy structure 2, respectively. Referring to FIGS. 2 and 5, the canopy structure 2 includes a rotation mechanism 21 and a canopy 22 connected to the rotation mechanism 21. The canopy 22 includes a canopy strip 221 and a canopy cloth (not shown) connected to the canopy strip 221. The canopy strip 221 is adapted to be connected to the rotation mechanism 21 to deploy or retract the canopy cloth, so that the canopy 22 is switched between the deployed state and the retracted state (see FIG. 14). In this embodiment, each canopy structure 2 includes two rotation mechanisms 21, and both ends of the canopy strip 221 are respectively connected to the corresponding rotation mechanisms 21. In other embodiments, each canopy structure 2 may include one or more than two rotation mechanisms 21, which are not limited herein.

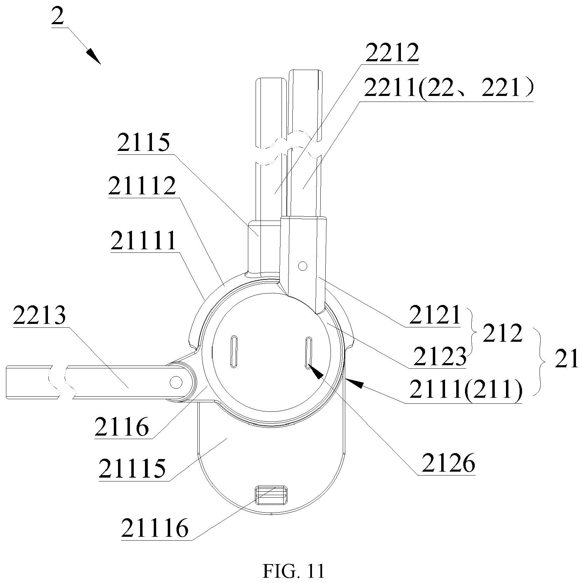

In some embodiments, as shown in FIGS. 5, 11 and 16, the canopy strip 221 includes a first canopy strip 2211, a second canopy strip 2212 and a third canopy strip 2213. The rotation mechanism 21 includes a fixing base 211 and a rotating base 212. The first canopy strip 2211 is connected to the rotating base 212, and the second canopy strip 2212 and the third canopy strip 2213 are respectively connected to the fixing base 211. The canopy 22 includes a first side located between the first canopy strip 2211 and the second canopy strip 2212 and a second side located between the third canopy strip 2213 and the second canopy strip 2212. When the rotating base 212 is pivoted relative to the fixing base 211, the first canopy strip 2211 drives at least a part of the canopy cloth to be deployed and retracted, i.e., the first side of the canopy 22 is switched between the deployed state and the retracted state. The third canopy strip 2213 is pivotably connected to the fixing base 211. When the third canopy strip 2213 is rotated relative to the fixing base 211, the second side of the canopy 22 is switched between the deployed state and the retracted state. In this embodiment, when both the first side of the canopy 22 and the second side of the canopy 22 are in the retracted state (not shown), the canopy 22 is in the retracted state. When both the first side of the canopy 22 and the second side of the canopy 22 are in the deployed state, the canopy 22 is in the deployed state (see FIG. 14). When the first side of the canopy 22 is in the retracted state and the second side of the canopy 22 is in the deployed state (see FIG. 11), or when the second side of the canopy 22 is in the retracted state and the first side of the canopy 22 is in the deployed state (not shown), the canopy 22 is in the semi-deployed state (or semi-retracted state).

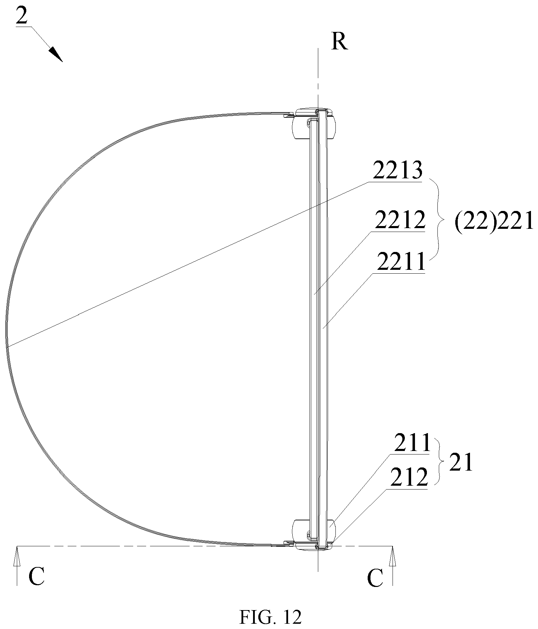

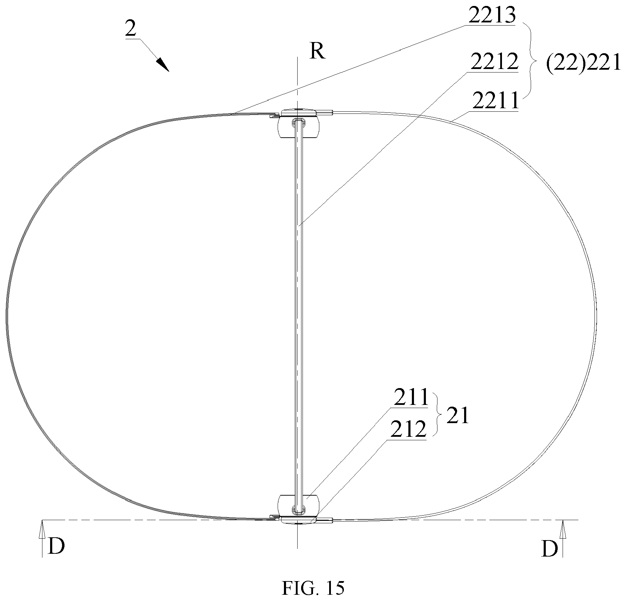

As shown in FIGS. 5, 11 to 16, each rotating base 212 has a first connecting portion 2121 extending in a direction away from the rotation axis R. The first canopy strip 2211 is detachably connected to the first connecting portion 2121. The first connecting portion 2121 is provided with a first insertion groove 2122, and an end portion of the first canopy strip 2211 is detachably inserted into the corresponding first insertion groove 2122. When the rotating base 212 is rotated relative to the fixing base 211, the first canopy strip 2211 can be rotated relative to the fixing base 211 between a first position with a minimum angle relative to the second canopy strip 2212 and a second position with a maximum angle relative to the second canopy strip 2212. In this embodiment, when the first canopy strip 2211 is at the first position (see FIG. 11), the first side of the canopy 2211 is retracted relative to the carrier body 1, i.e., the first side of the canopy 2211 is retracted, and when the first canopy strip 2211 is at the second position (see FIG. 14), the first side of the canopy 22 is deployed relative to the carrier body 1, i.e., the first side of the canopy 22 is deployed. In other embodiments not shown, it may also be that, when the first canopy strip 2211 is at the second position (see FIG. 14), the first side of the canopy is retracted relative to the carrier body 1, i.e., the first side of the canopy is retracted, and when the first canopy strip 2211 is at the first position (see FIG. 11), the first side of the canopy is deployed relative to the carrier body 1, i.e., the second side of the canopy is deployed. This is not limited in the present disclosure.

Referring in conjunction to FIG. 2, the second canopy strip 2212 is located between the first canopy strip 2211 and the third canopy strip 2213. And the second canopy strip 2212 is substantially perpendicular to the plane where the frame 2212 is located, i.e., the second canopy strip 2212 is substantially located in a vertical plane. Specifically, when the first canopy strip 2211 is at the first position (see FIG. 11), there is an angle of about 0° between the first canopy strip 2211 and the second canopy strip 2212, i.e., a plane where the first canopy strip 2211 is located substantially coincides with a plane where the second canopy strip 2212 is located, i.e., the plane where the first canopy strip 2211 is located is substantially perpendicular to the plane where the first frame 11a is located. When the first canopy strip 2211 is at the second position (see FIG. 14), there is a maximum angle (e.g., of about 90°) between the first canopy strip 2211 and the second canopy strip 2212. In this embodiment, when the first canopy strip 2211 is at the second position, the plane where the first canopy strip 2211 is located is parallel to or coincides with the plane where the frame 11 is located. In some embodiments, when the first canopy strip 2211 is at the second position, the first canopy strip 2211 just surrounds outside and abuts against the first frame 11a.

Further, as shown in FIGS. 5, 11 to 16, each fixing base 211 is provided with a second connecting portion 2115 and a third connecting portion 2116 which extend in a direction away from the rotation axis R, respectively. The second connecting portion 2115 is at an angle to the third connecting portion 2116, and the angle between the second connecting portion 2115 and the third connecting portion 2116 may be set according to actual needs. In this embodiment, the angle between the second connecting portion 2115 and the third connecting portion 2116 is, for example, about 90°. The second canopy strip 2212 is detachably connected to the second connecting portion 2115. The second connecting portion 2115 is provided with a second insertion groove 21151, and both ends of the second canopy strip 2212 are detachably inserted into the corresponding second insertion groove 21151. The third canopy strip 2213 is detachably and rotatably connected to the third connecting portion 2116, so that the third canopy strip 2213 is rotatable between a third position with a minimum angle relative to the second canopy strip 2212 and a fourth position with a maximum angle relative to the second canopy strip 2212. In this embodiment, when the third canopy strip 2213 is at the third position, the second side of the canopy 22 is retracted relative to the carrier body 1, i.e., the second side of the canopy 22 is in the retracted state, and when the third canopy strip 2213 is at the fourth position, the second side of the canopy 22 is deployed relative to the carrier body 1. In other embodiments, it is also possible that when the third canopy strip 2213 is at the fourth position, the second side of the canopy is retracted relative to the carrier body 1, i.e., the second side of the canopy is in the retracted state, and when the third canopy strip 2213 is at the third position, the second side of the canopy is deployed relative to the carrier body 1. This is not limited in the present disclosure.

Referring in conjunction to FIG. 2, when the third canopy strip 2213 is at the third position (not shown), a plane where the third canopy strip 2213 is located is parallel to the plane where the second canopy strip 2212 is located, i.e., there is an angle of about 0° between the third canopy strip 2213 and the second canopy strip 2212, i.e., the third canopy strip 2213 is substantially perpendicular to the plane where the frame 11 is located. When the third canopy strip 2213 is at the fourth position, the angle between the third canopy strip 2213 and the second canopy strip 2212 is maximum. Specifically, when the third canopy strip 2213 is at the fourth position, the plane where the third canopy strip 2213 is located is parallel to or coincides with the plane where the second frame 11b is located, and the angle between the third canopy strip 2213 and the second canopy strip 2212 is about 90°. In some embodiments, when the third canopy strip 2213 is at the fourth position, the third canopy strip 2213 just surrounds outside and abuts against the second frame 11b.

In this embodiment, when the first canopy strip 2211 is at the first position and the third canopy strip 22113 is at the third position (not shown), i.e., when both the first side of the canopy 22 and the second side of the canopy 22 are in the retracted state, the angle between the first canopy strip 2211 and the third canopy strip 2213 is minimum (about 0°), and the canopy 22 is in the retracted state. When the first canopy strip 2211 is at the second position and the third canopy strip 2213 is at the fourth position (see FIG. 14), i.e., when both the first side of the canopy 2211 and the second side of the canopy 22 are in the deployed state, the angle between the first canopy strip 2211 and the third canopy strip 2213 (i.e., the maximum deployment angle of the canopy 22) is about 180°, the first canopy strip 2211 is located in a plane substantially parallel to or coinciding with the first frame 11a and the third canopy strip 2213 is located in a plane substantially parallel to or coinciding with the second frame 11b, and the canopy 22 is in a deployed state. When the angle between the first canopy strip 2211 and the third canopy strip 2213 is greater than 0° and less than 180° (for example, 60°, 130°, or the like), the canopy 22 is in the semi-retracted state or the semi-deployed state (see FIG. 11).

With the canopy structure 2 according to this embodiment, when the canopy 22 is in the deployed state, the canopy 22 can be completely covered above the frame 11 of the carrier body 1 to avoid a gap being formed between the canopy 22 and the carrier body 1, so that the canopy structure has a good protecting and shading effect.

In another embodiment, the canopy strip 221 includes the first canopy strip 2211 and the second canopy strip 2212. The main difference between this embodiment and the foregoing embodiments is that the third canopy strip 2213 is not provided, and accordingly, the fixing base 211 may not be provided with the third connecting portion 2116. In this embodiment, the second canopy strip 2212 may be substantially perpendicular to the frame 11, or may be at anon-right angle to the frame 11, for example, at the angle of 60°, 80°, or the like. When the canopy 22 (or the first side of the canopy 22) is in the deployed state, the angle between the first canopy strip 2211 and the second canopy strip 2212 (i.e., the maximum deployment angle of the canopy 22) may be set as required by a person in the art, which is not limited in the present disclosure. In this embodiment, the same structures, as in the foregoing embodiments will not be described in detail herein. The canopy structure 2 of the present embodiment can be at least partially covered above the frame 11, providing both protection and ease of observation.

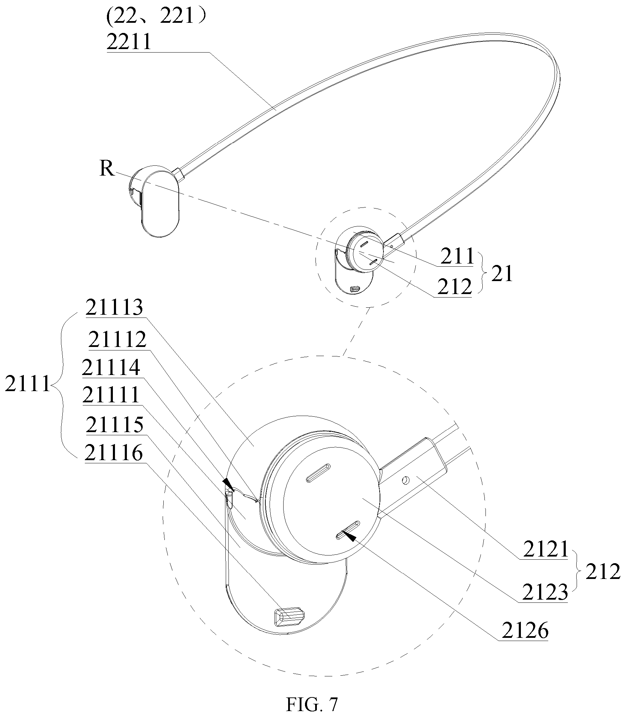

In a further embodiment, as shown in FIG. 7, the canopy strip 221 includes the first canopy strip 2211. In this embodiment, neither the second canopy strip 2212 nor the third canopy strip 2213 is provided. And accordingly, the fixing base 211 may not be provided with the second connecting portion 2115 and the third connecting portion 2116. For the specific configuration of the first canopy strip 2211 in this embodiment, reference may be made to the above embodiment. In this embodiment, a side of the canopy 22 away from the first canopy strip 2211 is connected to the frame 11 (for example, the first frame 11a) of the carrier body 1, so that the canopy 2211 is switched between the retracted state and the opened state when the first canopy strip 2211 is rotated between the first position and the second position. When the first canopy strip 2211 is at the first position, the first canopy strip 2211 is located in a plane parallel to or coinciding with the plane of the first frame 11a, both sides of the canopy 2211 are relatively close to each other, and the canopy 2211 is in a retracted state. When the first canopy strip 2211 is at the second position, both sides of the canopy 2211 are relatively away from each other, and the canopy 2211 is in the deployed state. In other embodiments not shown, it may also be that when the first canopy strip 2211 is at the second position, the canopy is in the retracted state; and when the first canopy strip 2211 is at the first position, both sides of the canopy 2211 are relatively away from each other and the canopy 2211 is in the deployed state. This is not limited in the present disclosure. The canopy structure 2 shown in FIG. 7 can be at least partially covered above the frame 11, which provides both a protective effect and ease of observation. The structure of the canopy 22 in this embodiment is simple, which not only reduces the weight of the canopy 22, but also reduces the production cost of the canopy 22.

The present disclosure also provides a rotation mechanism 21 adapted to connect the canopy 22 to the carrier body 1. For convenience of description, an example of the rotation mechanism 21 on one side of the canopy 22 will be described below. As shown in FIGS. 1, 2 and 4, the rotation mechanism 21 includes a fixing base 211 adapted to be connected to the carrier body 1 and a rotating base 212 rotatably connected to the fixing base 211. The fixing base 211 is detachably connected to the connecting base 13 of the carrier, so as to realize quick disassembly and assembly between the canopy 22 and the carrier body 1. In other embodiments not shown, the fixing base 211 may be fixedly connected to the connecting base 13. In yet other embodiments not shown, the fixing base 211 may be connected to the frame 11 of the carrier body 1. This is not limited in the present disclosure.

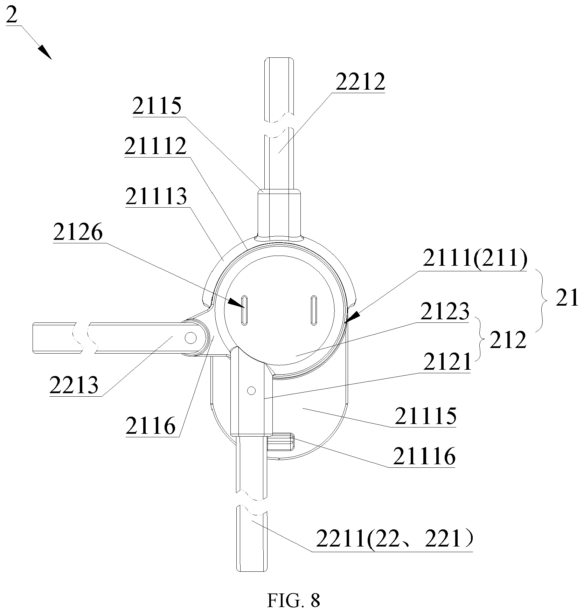

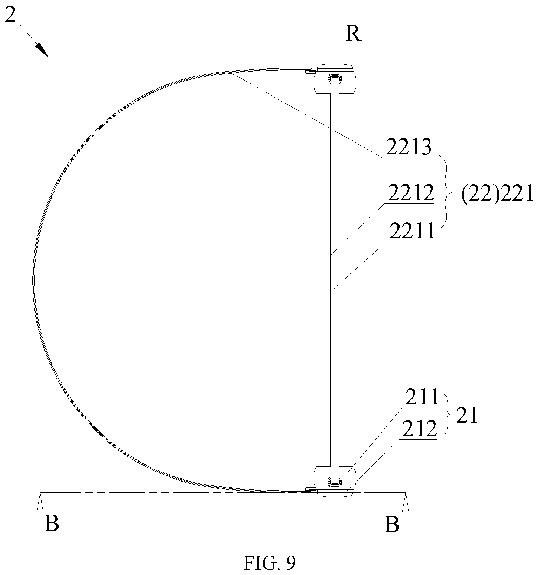

Referring to FIGS. 8 to 16, the rotating base 212 has a mounting or dismounting position (see FIGS. 8 to 10) relative to the fixing base 211, and can be rotated at least between a first rotation position (see FIGS. 11 to 13) and a second rotation position (see FIGS. 14 to 16) relative to the fixing base 211, thereby driving the first canopy strip 2211 to rotate between the first position and the second position. When the rotating base 212 is at the mounted or dismounting position (see FIGS. 8 to 10), the rotating base 212 can be engaged with or disengaged from the fixing base 211 along the direction of the rotation axis R. When the rotating base 212 is at the first rotation position (see FIGS. 11 to 13), the first canopy strip 2211 is at the first position. And when the rotating base 212 is in the second rotation position (see FIGS. 14 to 16), the first canopy strip 2211 is at the second position.

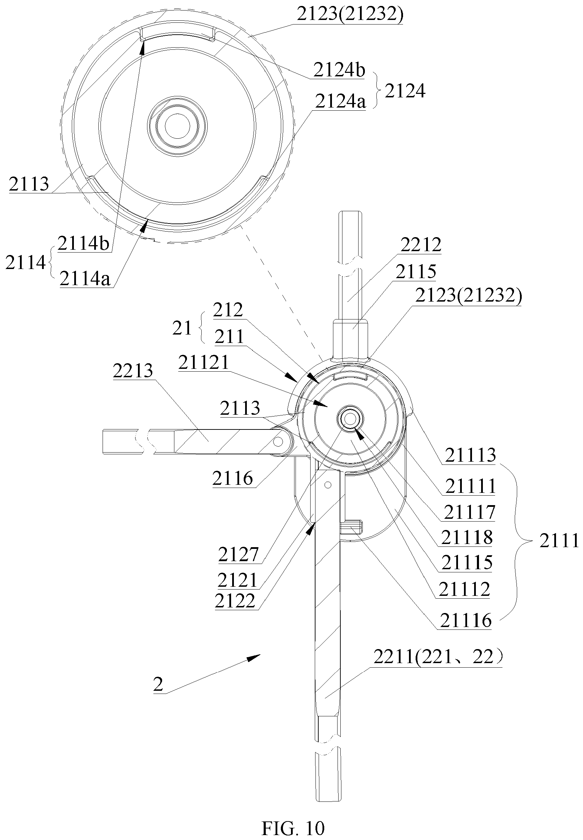

In some embodiments, as shown in FIGS. 10, 17 to 19, the fixing base 211 includes a fixing base body 2111 adapted to be connected to the carrier body 1, a boss portion 2112 disposed at a side of the fixing base body 2111 facing away from the carrier body 1, and a connecting flange 2113 extending circumferentially from an end portion of the boss portion 2112. The fixing base body 2111 and the connecting flange 2113 are respectively connected to two ends of the boss portion 2112, and a connecting groove 2117 adapted to be engaged with at least a part of the rotating base 212 is formed between the fixing base body 2111 and the connecting flange 2113. The second connecting portion 2115 and the third connecting portion 2116 are respectively connected to the fixing base body 2111 and extend in the direction away from the rotation axis R. In this embodiment, the rotating base 212 may be a one-piece molded member made of plastic molded by injection.

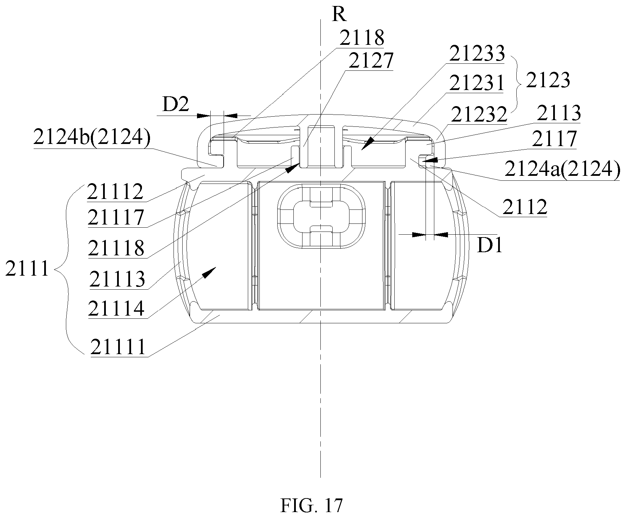

Further, as shown in FIGS. 17 to 19, the fixing base body 2111 includes a first wall portion 21111, a second wall portion 21112 opposite to the first wall portion 21111, and a circumferential wall portion 21113 connected between the first wall portion 21111 and the second wall portion 21112. The first wall portion 21111, the second wall portion 21112 and the circumferential wall portion 21113 define a connecting recess 21114. The second wall portion 21112 has a substantially circular cross section in the plane perpendicular to the rotation axis R. The circumferential wall portion 21113 has a substantially arcuate cross section in the plane perpendicular to the rotation axis R, and has a substantially arcuate longitudinal section in a radial plane parallel to the rotation axis R is arcuate. The second connecting portion 2115 and the third connecting portion 2116 are respectively disposed on an outer peripheral surface of the fixing base body 2111. Specifically, the second connecting portion 2115 is connected to the circumferential wall portion 21113, and the third connecting portion 2116 is connected to the second wall portion 21112. The first wall portion 21111 extends away from the circumferential wall portion 21113 to form an elastic arm 21115 provided with an engaging protrusion 21116.

Referring in conjunction to FIG. 4, when at least a part of the connecting base 211 is accommodated in the connecting recess 21114, the engaging protrusion 21116 can be engaged with the connecting base body 131 of the connecting base 211 to detachably connect the fixing base 211 to the carrier body 1. Specifically, when the connecting base body 131 of the connecting base 211 is at least partially accommodated in the connecting recess 21114 of the fixing base body 2111, the engaging protrusion 21116 can be engaged with a lower edge or a lower end portion of the first side wall 13121 of the accommodating groove 1312, so that the fixing base 211 can be more firmly connected to the connecting base 211. When it is necessary to detach the rotation mechanism 21 from the carrier body 1, an external force F may be applied to the elastic arm 21115 to separate the engaging protrusion 21116 from the lower edge or the lower end portion of the first side wall 13121, i.e., to disengage the engaging protrusion 21116 from the lower edge or the lower end portion of the first side wall 13121, so that the rotation mechanism 21 can be separated from the connecting base 13, thereby achieving detachment of the rotation mechanism 21 from the carrier body.

In other embodiments where the connecting base 13 is not provided, the connecting recess 21114 is adapted to at least partially accommodate the frame 11 of the carrier body 1. When at least a part of the frame 11 is accommodated in the connecting recess 21114, the engaging protrusion 21116 can be engaged with the frame 11, thereby allowing the fixing base 211 to be detachably connected to the carrier body 1. Specifically, when the frame tube 111 (for example, the straight tube 111a) of the frame 11 is accommodated in the connecting recess 21114, the engaging protrusion 21116 can be engaged with the lower edge of the frame tube 111 (for example, the straight tube 111a). This arrangement makes it possible to quickly mount the canopy 22 on the carrier body 1.

In some embodiments, as shown in FIGS. 17 to 19, the boss portion 2112 is in an annular structure with a hollow inner cavity 21121, and has a circular cross section in a plane perpendicular to the rotation axis R. An end of the boss portion 2112 is connected to the fixing base body 2111 and another end of the boss portion 2112 is provided with a connecting flange 2113, so that the rotating base 212 is rotatably connected to the fixing base 211. In other embodiments not shown, the boss portion 2112 may not be provided, and the connecting flange 2113 may be disposed on the fixing base body 2111, such as on the outer peripheral surface of the second wall portion 21112. For example, the connecting flange 2113 may extend directly from the edge of the second wall portion 21112 along the circumferential direction.

In some embodiments, as shown in FIGS. 10, 13 and 20, the rotating base 212 includes a discal portion 2123, and the first connecting portion 2121 is disposed in a circumference of the discal portion 2123 and extends in a direction away from the rotation axis R. The rotating base 212 may be an integrally molded member formed by injection molding of plastic. The discal portion 2123 is provided with a connecting rib 2124 adapted to be engaged with at least a portion of the connecting flange 2113, so that the rotating base 212 is connected to the fixing base 211 and pivotable about the rotation axis R relative to the fixing base 211. The connecting flange 2113 is provided with an avoiding recess 2114 that can be passed through by the connecting rib 2124, so that the rotating base 212 can be engaged with or separated from the fixing base 211 when the connecting rib 2124 is engaged with the avoiding recess 2114 (i.e., when the connecting rib 2124 is aligned with the avoiding recess 2114).

With the rotation mechanism 21 according to this embodiment, the rotatable connection between the rotating base 212 and the fixing base 211 is realized by the engagement between the connecting rib 2124 and the connecting flange 2113, so that a pivoting angle between the rotating base 212 and the fixing base 211 can be adjusted to allow the canopy 22 to be switched between the deployed state and the retracted state, and therefore the canopy 22 can be adapted to different use requirements. Moreover, when the connecting rib 2124 is aligned with the avoiding recess 2114, the quick disassembly and assembly between the rotating base 212 and the fixing base 211 can be realized, i.e., a quick disassembly and assembly between the canopy and the carrier body 1 can be realized, by providing the avoiding recess 2114. And the pivoting connection between the two can be realized without an additional connecting member, which is simple in structure and low in cost.

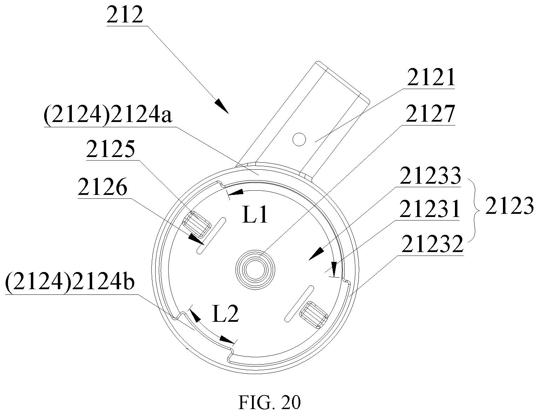

Further, as shown in FIGS. 17 and 20, the discal portion 2123 has a substantially circular cross section in the plane perpendicular to the rotation axis R. The discal portion 2123 includes a rotating base bottom wall 21231 and a rotating base side wall 21232 connected to the rotating base bottom wall 21231. The rotating base bottom wall 21231 and the rotating base side wall 21232 define a receiving groove 21233, so that at least a part of the fixing base 211 can be accommodated in the receiving groove 21233. The rotating base side wall 21232 is arranged along a circumferential direction about the rotation axis R and is adapted to at least partially surround the boss portion 2112, and the connecting rib 2124 is disposed on the rotating base side wall 21232. When the rotating base 212 is connected to the fixing base 211, at least a portion of the connecting rib 2124 is inserted into the connecting groove 2117 and engaged with at least a part of the connecting flange 2113, so that the connecting rib 2124 is at least partially restricted in the connecting groove 2117 and is rotatable about the rotation axis R relative to the fixing base 211. In this embodiment, the connecting rib 2124 is connected to the end surface of the rotating base side wall 21232, and is disposed opposite to the rotating base bottom wall 21231. The connecting rib 2124 extends from the end portion of the rotating base side wall 21232 in a direction towards the rotation axis R from the end portion of the rotating base side wall 21232 (i.e., extends inward). The connecting flange 2113 of the fixing base 211 extends from the end portion of the boss portion 2112 in a direction away from the rotation axis R. In other embodiments not shown, the boss portion 2112 of the fixing base 211 facing the discal portion 2123 of the rotating base 212 forms a receiving groove 21233 to at least partially accommodate the discal portion 2123 of the rotating base 212. The connecting flange 2113 extends inward from the end portion of the boss portion 2112 or a side wall of the receiving groove 21233 in the direction close to the rotation axis R, and the connecting groove 2117 capable of accommodating at least a part of the connecting rib 2124 is formed between the connecting flange 2113 and the bottom wall of the receiving groove 21233. And accordingly, the connecting rib 2124 of the discal portion 2123 extends from the rotating base side wall 21232 in the direction away from the rotation axis R (i.e., extends outward).

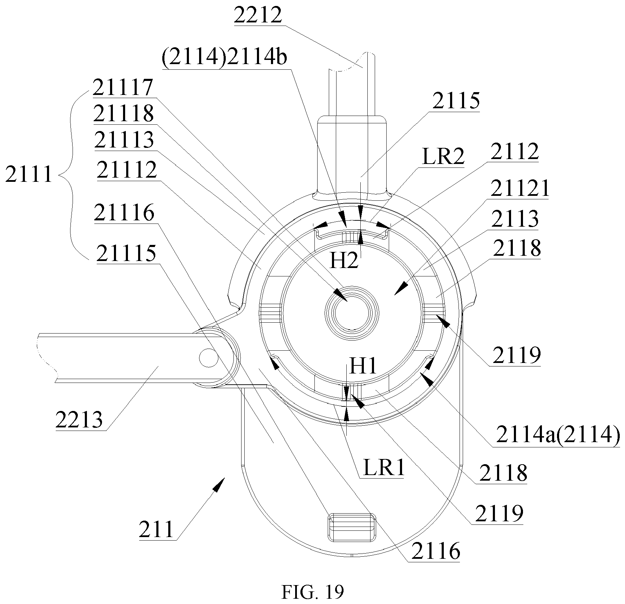

In an embodiment, as shown in FIGS. 10a, 10, 17, 19 to 20, the connecting rib 2124 includes a first connecting rib 2124a and a second connecting rib 2124b. Referring to FIG. 20, the first connecting rib 2124a and the second connecting rib 2124b are arranged along the circumferential direction about the rotation axis R, and are substantially arcuate. A size of the first connecting rib 2124a in the circumferential direction about the rotation axis R is greater than a size of the second connecting rib 2124b in the circumferential direction about the rotation axis R. Namely, an arc length L1 of the first connecting rib 2124a is greater than an arc length L2 of the second connecting rib 2124b. Referring to FIGS. 19 and 20, the avoiding recess 2114 includes a first avoiding recess 2114a adapted to cooperate with the first connecting rib 2124a and a second avoiding recess 2114b adapted to cooperate with the second connecting rib 2124b. The first avoiding recess 2114a and the second avoiding recess 2114b are arranged along the circumferential direction about the rotation axis R. a size of the first avoiding recess 2114a in the circumferential direction about the rotation axis R is greater than a size of the second avoiding recess 2114b in the circumferential direction about the rotation axis R. Namely, an arc length LR1 of the first avoiding recess 2114a is greater than an arc length LR2 of the second avoiding recess 2114b. In this embodiment, the arc length LR1 of the first avoiding recess 2114a is greater than or equal to the arc length L1 of the first connecting rib 2124a, and the arc length LR2 of the second avoiding recess 2114b is greater than or equal to the arc length L2 of the second connecting rib 2124b, so that the first connecting rib 2124a is capable of passing through the first avoiding recess 2114a and the second connecting rib 2124b is capable of passing through the second avoiding recess 2114b, and thereby, the first connecting rib 2124a and the second connecting rib 2124b can be engaged with or disengaged from the connecting flange 2113. The arc lengths of the first avoiding recess 2114a and the second avoiding recess 2114b are not equal in the circumferential direction. In this way, when rotated by an angle of 180° from the mounting position (i.e., when the first connecting rib 2124a is aligned with the second avoiding recess 2114b and the second connecting rib 2124b is aligned with the first avoiding recess 2114a), the rotating base 212 is not disengaged from the fixing base 211, ensuring that the rotating base 212 can be rotated by a large range of angles relative to the fixing base 211 without being disengaged.

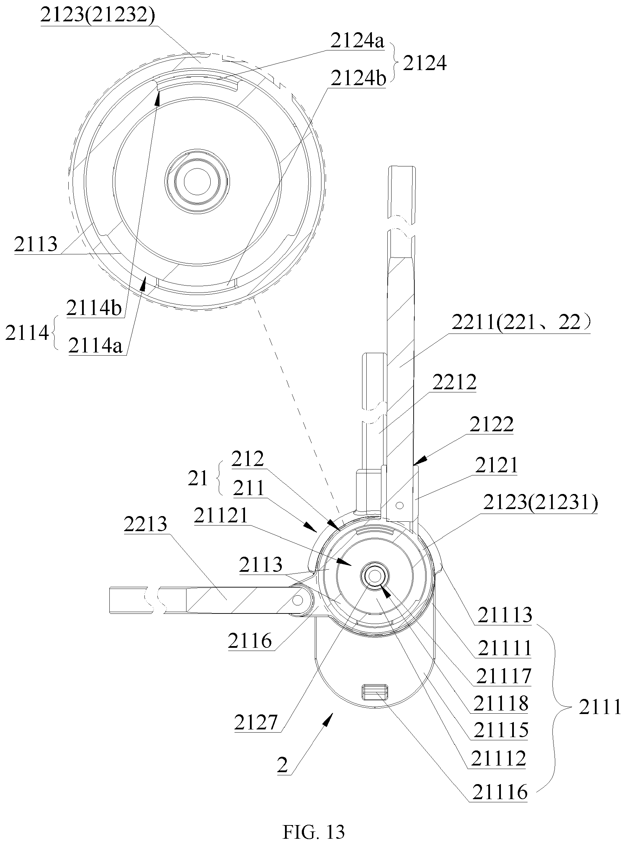

Further, referring to FIGS. 17 and 19, a size of the first connecting rib 2124a in a radial direction perpendicular to the rotation axis R is less than a size of the second connecting rib 2124b in the radial direction perpendicular to the rotation axis R. Namely, a width D1 of the first connecting rib 2124a in a radial direction of the discal portion 2123 is less than a width D2 of the second connecting rib 2124b in the radial direction of the discal portion 2123. Accordingly, the size of the first avoiding recess 2114a in the radial direction perpendicular to the rotation axis R is less than the size of the second avoiding recess 2114b in the radial direction perpendicular to the rotation axis R. Namely, a depth H1 of the first avoiding recess 2114a in a radial direction of the boss portion 2112 is less than a depth H2 of the second avoiding recess 2114b in the radial direction of the boss portion 2112. In this way, when the second connecting rib 2124b is aligned with the first avoiding recess 2114a (see FIG. 13), at least a part of the second connecting rib 2124b can be accommodated in the connecting groove 2117 and engaged with the connecting flange 2113, thereby preventing the second connecting rib 2124b from disengaging form the first avoiding recess 2114a, and further enabling the rotating base 212 to be engaged with or disengaged from the fixing base 211 only when the first connecting rib 2124a is aligned with the first avoiding recess 2114a and the second connecting rib 2124b is aligned with the second avoiding recess 2114b (i.e., when the rotating base 212 is in the mounting or dismounting position).

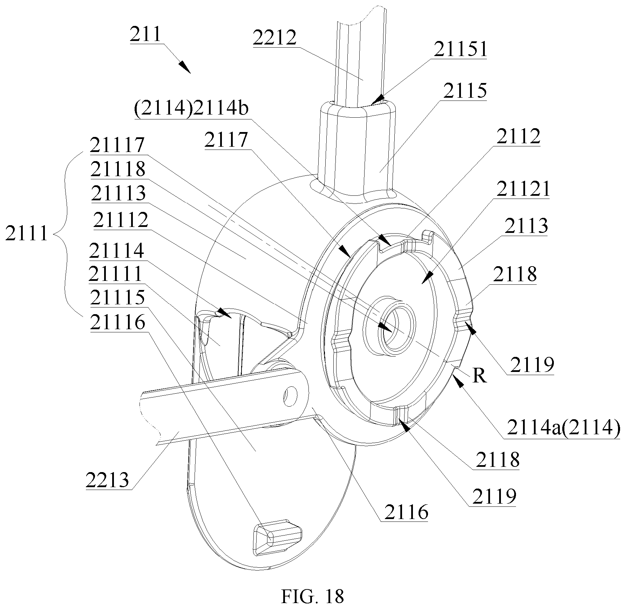

In this embodiment, as shown in FIGS. 18 to 19, one first connecting rib 2124a is provided, and one second connecting rib 2124b is provided. The first connecting rib 2124a and the second connecting rib 2124b are symmetrically arranged relative to the rotation axis R (i.e., center points of the first connecting rib 2124a and the second connecting rib 2124b are symmetrically arranged relative to the rotation axis R). Accordingly, one first avoiding recess 2114a is provided, and one second avoiding recess 2114b is provided. The first avoiding recess 2114a and the second avoiding recess 2114b are symmetrically arranged relative to the rotation axis R (i.e., center points of the first avoiding recess 2114a and the second avoiding recess 2114b are symmetrically arranged relative to the rotation axis R). This symmetrical distribution of the connecting ribs 2124a, 2124b and the avoiding recesses 2114a, 2114b makes the rotating base 212 more stable during rotation relative to the fixing base 211. In other embodiments not shown, the number of the first connecting ribs 2124a may be greater than or equal to two, and the number of the second connecting ribs 2124b may be greater than or equal to two. And accordingly, the number of the first avoiding recesses 2114a may be greater than or equal to two, and the number of the second avoiding recesses 2114b may be greater than or equal to two. The number of the first avoiding recesses 2114a may be greater than or equal to the number of the first connecting ribs 2124a, and the number of the second avoiding recesses 2114b may be greater than or equal to the number of the second connecting ribs 2124b.

In an embodiment, as shown in FIGS. 18 to 20, an end surface of the boss portion 2112 is provided with a positioning recess 2119 recessed in a direction parallel to the rotation axis R. The discal portion 2123 is provided with a positioning protrusion 2125, and specifically, the rotating base bottom wall 21231 of the discal portion 2123 is provided with the positioning protrusion 2125. The positioning protrusion 2125 is adapted to cooperate with the positioning recess 2119 to enable the rotating base 212 to be locked at least at the first rotation position or the second rotation position relative to the fixing base 211. The positioning protrusion 2125 is elastically deformable, so that the rotating base 212 can be rotated under an external force at least between the first rotation position and the second rotation position. When the rotating base 212 is at the first rotation position, the first canopy strip 2211 is at the first position, and when the rotating base 212 is in the second rotation position, the first canopy strip 2211 is at the second position. In other embodiments not shown, the end surface of the boss portion 2112 may be provided with a positioning protrusion 2125, and the discal portion 2123 may be provided with a positioning recess 2119, e.g., the rotating base bottom wall 21231 of the discal portion 2123 may be provided with a positioning recess 2119, which is not limited in the present disclosure.

Further, the positioning recess 2119 is provided to an integer multiple of the positioning protrusion 2125. At least one positioning protrusion 2125 is provided, at least two positioning recesses 2119 are provided. For example, two positioning protrusions 2125 are provided, and two, four or six positioning recesses 2119 are provided. In this embodiment, as shown in FIGS. 18 to 20, two positioning protrusions 2125 are provided, and the two positioning protrusions 2125 are symmetrically arranged about the rotation axis R. Four positioning recesses 2119 are provided, and the four positioning recesses 2119 are symmetrically arranged about the rotation axis R. In other embodiments, the positioning protrusion 2125 may also be provided to an integer multiple of the positioning recess 2119. The angle between the lines of the two adjacent positioning recesses 2119 and the rotation axis R is about 90°, so that the rotating base 212 can be locked in a plurality of angular positions spaced apart by an angle of 90° relative to the fixing bases 211, respectively. Referring to FIGS. 11 to 13, the rotating base 212 is locked at the first rotation position relative to the fixing base 211, and the first canopy strip 2211 is at the first position, and in this case, the first side of the canopy 22 is in the retracted state Referring to FIGS. 14 to 16, the rotating base 212 is locked relative to the fixing base 211 in the second rotation position, which is at an angle of 90° relative to the first rotation position, and the first canopy strip 2211 is at the second position. In this case, the first side of the canopy is in the deployed state. Referring to FIGS. 8 to 10, the rotating base 212 is locked relative to the fixing base 211 at an angle of 180° relative to the first rotation position, and the rotating base 212 is in the mounting or dismounting position. The fixing base 211 can be locked at different angles by adjusting the number of the positioning recesses 2119, the number of the positioning protrusions 2125 and the angle between the adjacent positioning recesses 2119.

Further, as shown in FIGS. 18 and 19, the boss portion 2112 is provided with a protruding portion 2118 protruding in the direction parallel to the rotation axis R, and the protruding portion 2118 is formed with the above positioning recesses 2119. Referring in conjunction to FIGS. 20, the protruding portion 2118 is disposed on and continuously transitions with an end surface of the boss portion 2112, which is configured to be engaged with the discal portion 2123. A depth of the positioning recesses 2119 in the direction of the rotation axis R can be increased by providing the protruding portion 2118, so that a depth of the engagement between the positioning protrusion 2125 and the positioning recesses 2119 increases, thereby allowing more stable engagement between the positioning protrusion 2125 and the positioning recesses 2119. Moreover, as the protruding portion 2118 continuously transitions with the end surface of the boss portion 2112, the friction between the positioning protrusion 2125 and the end surface of the boss portion 2112 is not excessively large when the positioning protrusion 2125 is located at the end surface of the boss portion 2112, which is located between the two adjacent positioning recesses 2119, thereby facilitating the rotation of the rotating base 212 relative to the fixing base 211, and facilitating to switch the canopy 22 between the retracted state and the deployed state.

Further, as shown in FIG. 20, the rotating base bottom wall 21231 is provided with a through hole 2126 configured to increase elastic deformation of the positioning protrusion 2125, so that when the rotating base 212 is rotated relative to the fixing base 211, the rotating base 212 is easy to deform elastically, thereby reducing the resistance of the rotating base 212. And in this way, the rotating base 212 is easy to be rotated relative to the fixing base 211, further facilitating to retract or deploy the canopy 22. In this embodiment, the through hole 2126 is closer to the rotation axis R than the positioning protrusion 2125. Two through holes 2126 are provided, and the number of the through holes 2126 can be set according to the number of the positioning protrusions 2125. One or more through holes 2126 may be provided in the vicinity of each positioning protrusion 2125 to increase the amount of elastic deformation of the positioning protrusion 2125. Referring to FIG. 20, both of the through holes 2126 are located between the two positioning protrusions 2125. The two through holes 2126 are symmetrically arranged relative to the rotation axis R and are located at a straight line where a line connecting the two positioning protrusions 2125 is located. The through hole 2126 is a strip-shaped hole, and an extending direction of the through hole 2126 is perpendicular to the straight line where the line connecting the two positioning protrusions 2125 is located. In other embodiments not shown, the through hole 2126 may be in other shapes, positions, and extending directions, e.g., is an arcuate hole partially surrounding the positioning protrusions 2125, which is not limited herein.

In an embodiment, as shown in FIG. 17, the fixing base body 2111 is further provided with a boss portion 21117 located in the hollow inner cavity 21121 of the boss portion 2112 and extending in the direction of the rotation axis R. The boss portion 21117 is provided with an insertion hole 21118, and the rotating base 212 is provided with an insertion post 2127 adapted to be fitted with the insertion hole 21118. The insertion fit between the insertion hole 21118 and the insertion post 2127 facilitates positioning when the rotating base 212 is attached to the fixing base 211. In other embodiments not shown, the post portion 21117 may not be provided, and the insertion hole 21118 is formed from the hollow inner cavity 21121 of the boss portion 2112. In other embodiments not shown, the rotating base 212 may be provided with the insertion hole 21118, and the fixing base body 2111 is provided with the insertion post 2127 adapted to cooperate with the insertion hole 21118, which is not limited in the present disclosure.

The operation principle of the rotation mechanism 21 in this embodiment is as follows.

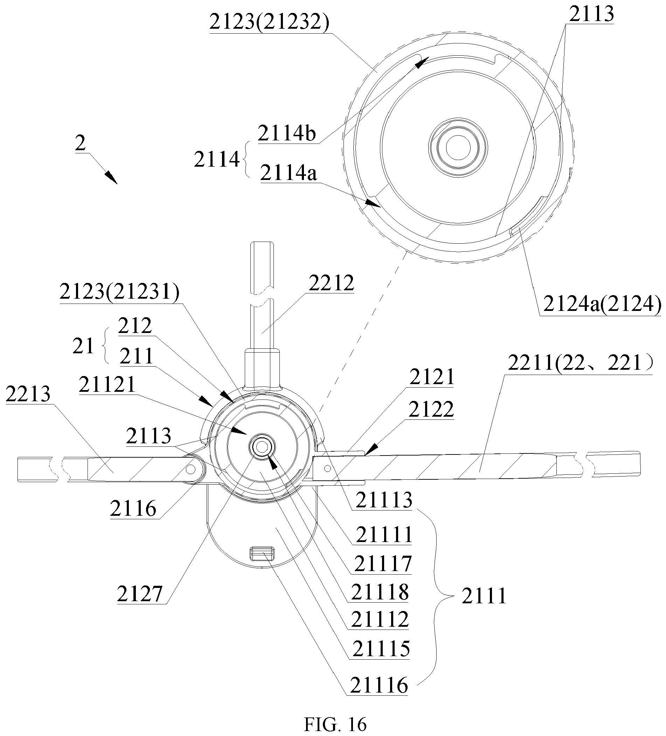

When it is required to mount the canopy structure 2 on the carrier body 1 and adjust the canopy structure 2, the fixing base 211 is engaged with the connecting base 2114b, and then the first connecting rib 2124a and the second connecting rib 2124b of the rotating base 212 are respectively aligned with the first avoiding recess 2114a and the second avoiding recess 2114b of the fixing base 211. In this case, the first connecting rib 2124a and the second connecting rib 2124b enter the connecting groove 2117, and the first connecting rib 2124a and the second connecting rib 2124b are engaged with the connecting flange 2113 of the fixing base 211 after the rotating base 212 is further rotated by an arbitrary angle. Subsequently, the rotating base 212 is rotated to an arbitrary position (including the first rotation position and the second rotation position) between the first rotation position (see FIG. 13) and the second rotation position (see FIG. 16), and then the canopy 22 is connected to the rotating base 212 and the fixing base 211, respectively. In this case, the canopy 22 can be switched between the deployed state and the retracted state by switching the rotating base 212 between the first rotation position and the second rotation position.

The technical features of the embodiments described above may be combined arbitrarily. For the sake of brevity, not all possible combinations of the technical features in the embodiments are described. However, as long as there is no contradiction between the combinations of the technical features, they shall be considered as the scope of the specification.

The above-described embodiments are only some embodiments of the present disclosure, and their description is more specific and detailed, but cannot be understood as a limitation on the scope of the application. It should be noted that, for a person of ordinary skill in the art, several modifications and improvements may be made without departing from the concept of the present disclosure, which are within the protection scope of the present disclosure. Therefore, the scope of protection of this patent application shall be subject to the appended claims.

## Claims

1. A rotation mechanism (21) for mounting a canopy (22) on a carrier body (1), the rotation mechanism (21) comprising:
a rotating base (212) adapted to be connected to the canopy (22) and comprising a discal portion (2123) and a connecting rib (2124) disposed on the discal portion (2123); and
a fixing base (211) adapted to be connected to the carrier body (1) and comprising a fixing base body (2111) and a connecting flange (2113) adapted to be engaged with the connecting rib (2124), the connecting flange (2113) being connected to the fixing base body (2111);
wherein the connecting flange (2113) is provided with an avoiding recess (2114), and the connecting rib (2124) is capable of passing through the avoiding recess (2114) to be engaged with the connecting flange (2113), so that the rotating base (212) is connected to the fixing base (211) and pivotable about a rotation axis (R) relative to the fixing base (211).

2. The rotation mechanism (21) according to claim 1, wherein the fixing base (211) further comprises a boss portion (2112) disposed on the fixing base body (2111), and the connecting flange (2113) is disposed on the boss portion (2112); and
optionally wherein the connecting flange (2113) is provided at an end portion of the boss portion (2112) configured to be engaged with the discal portion (2123), and the connecting rib (2124) is provided at an end surface of the discal portion (2123) configured to be engaged with the fixing base (211).

3. The rotation mechanism (21) according to claim 1 or 2, wherein the connecting flange (2113) extends in a plane perpendicular to the rotation axis (R) in a direction away from the rotation axis (R), and the connecting rib (2114) extends in the plane perpendicular to the rotation axis (R) in a direction towards the rotation axis (R).

4. The rotation mechanism (21) according to any one of claim 1 to 3, wherein the connecting rib (2124) comprises a first connecting rib (2124a) and a second connecting rib (2124b), a size of the first connecting rib (2124a) in a circumferential direction about the rotation axis (R) is greater than a size of the second connecting rib (2124b) in the circumferential direction about the rotation axis (R);
wherein the avoiding recess (2114) comprises a first avoiding recess (2114a) adapted to cooperate with the first connecting rib (2124a) and a second avoiding recess (2114b) adapted to cooperate with the second connecting rib (2124b); and
optionally wherein a size of the first connecting rib (2124a) in a radial direction perpendicular to the rotation axis (R) is less than a size of the second connecting rib (2124b) in the radial direction perpendicular to the rotation axis (R), and a size of the first avoiding recess (2114a) in the radial direction perpendicular to the rotation axis (R) is less than a size of the second avoiding recess (2114b) in the radial direction perpendicular to the rotation axis (R).

5. The rotation mechanism (21) according to claim 2 and optionally claims 3 or 4, wherein the rotating base (212) is rotatable between a first rotation position and a second rotation position, one of the discal portion (2123) and the end surface of the boss portion (2112) is provided with at least one positioning recess (2119), and the other of the end surface of the boss portion (2112) and the discal portion (2123) is provided with at least one positioning protrusion (2125) adapted to cooperate with the positioning recess (2119) so that the rotating base (212) is capable of being locked at least at the first rotation position or the second rotation position relative to the fixing base (211);
optionally wherein a number of the at least one positioning recess (2119) is an integer multiple of a number of the at least one positioning protrusion (2125); and
optionally wherein the boss portion (2112) is provided with a protruding portion (2118) protruding along a direction parallel to the rotation axis (R), and the protruding portion (2118) is formed with the at least one positioning recess (2119).

6. The rotation mechanism (21) according to claim 5, wherein the discal portion (2123) comprises a rotating base bottom wall (21231) and a rotating base side wall (21232) connected to the rotating base bottom wall (21231), the rotating base side wall (21232) is arranged in a circumferential direction around the rotation axis (R), and the rotating base side wall (21232) is adapted to at least partially surround the boss portion (2112);
wherein the rotating base bottom wall (21231) is provided with the at least one positioning protrusion (2125), and the end surface of the boss portion (2112) configured to cooperate with the rotating base bottom wall (21231) is provided with the at least one positioning recess (2119);
optionally wherein the rotating base bottom wall (21231) is provided with a through hole (2126) configured to increase elastic deformation of the at least one positioning protrusion (2125); and
optionally wherein the through hole (2126) is closer to the rotation axis (R) than the at least one positioning protrusion (2125).

7. The rotation mechanism (21) according to any one of claims 1 to 6, wherein the fixing base body (2111) is provided with a connecting recess (21114) adapted to at least partially accommodate the carrier body (1) to connect the fixing base (211) to the carrier body (1);
optionally wherein the fixing base body (2111) comprises a first wall portion (21111), a second wall portion (21112) disposed opposite to the first wall portion (21111) and a circumferential wall portion (21113) connected between the first wall portion (21111) and the second wall portion (21112), the first wall portion (21111), the second wall portion (21112) and the circumferential wall portion (21113) define the connecting recess (21114), the first wall portion (21111) extends away from the circumferential wall portion (21113) to form an elastic arm, and a side surface of the elastic arm facing the second wall portion (21112) is provided with an engaging protrusion (21116); wherein the carrier body (1) comprises a frame tube (111) and a connecting base (13) connected to the frame tube (111), and when the connecting recess (21114) at least partially accommodates the connecting base (13), the engaging protrusion (21116) is capable of being engaged with the connecting base (13) to detachably connect the fixing base (211) to the carrier body (1).

8. The rotation mechanism (21) according to any one of claims 1 to 7, wherein the fixing base body (2111) is provided with a connecting recess (21114) adapted to at least partially accommodate the carrier body (1) to connect the fixing base (211) to the carrier body (1); and
wherein the fixing base body (2111) comprises a first wall portion (21111), a second wall portion (21112) disposed opposite to the first wall portion (21111) and a circumferential wall portion (21113) connected between the first wall portion (21111) and the second wall portion (21112), the first wall portion (21111), the second wall portion (21112) and the circumferential wall portion (21113) define the connecting recess (21114), and a side surface of first wall portion (21111) facing the second wall portion (21112) is provided with an engaging protrusion (21116), so that when the connecting recess (21114) at least partially accommodates a frame tube (111) of the carrier body (1), the engaging protrusion (21116) is capable of being engaged with the frame tube (111) to detachably connect the fixing base (211) to the carrier body (1).

9. A canopy structure (2) adapted to be mounted on a carrier body (1), the canopy structure (2) comprising:
a canopy (22) with a canopy strip (221); and
a rotation mechanism (21) according to any one of claims 1 to 8;
wherein the canopy strip (221) is connected to the rotation mechanism (21) to allow the canopy (22) to be switched between a retracted state and a deployed state.

10. The canopy structure (2) according to claim 9, wherein the canopy strip (221) comprises a first canopy strip (2211), the rotating base (212) further comprises a first connecting portion (2121) connected to the discal portion (2123) and extending in a direction away from the rotation axis (R), and the first canopy strip (2211) is detachably connected to the first connecting portion (2121).

11. The canopy structure (2) according to claim 10, wherein the first canopy strip (2211) is rotatable between a first position and a second position relative to the fixing base (211);
wherein when the first canopy strip (2211) is at one of the first and second positions, the canopy (22) is in the retracted state, and when the first canopy strip (2211) is at the other of the first and second positions, the canopy (22) is in the deployed state; or
wherein when the first canopy strip (2211) is at the first position, there is a maximum angle between a plane where the first canopy strip (2211) is located and a plane where a frame tube (111) of the carrier body (1) is located, and when the first canopy strip (2211) is at the second position, the first canopy strip (2211) is in the same plane as the frame tube (111) of the carrier body (1).

12. The canopy structure (2) according to any one of claims 9 to 11, wherein the canopy strip (221) comprises a first canopy strip (2211) and a second canopy strip (2212), the rotating base (212) further comprises a first connecting portion (2121) connected to the discal portion (2123) and extending in a direction away from the rotation axis (R), and the first canopy strip (2211) is detachably connected to the first connecting portion (2121); and
wherein the fixing base body (2111) of the fixing base (211) is provided with a second connecting portion (2115) extending in a direction away from the rotation axis (R), and the second canopy strip (2212) is detachably connected to the second connecting portion (2115).

13. The canopy structure (2) according to claim 12, wherein the first canopy strip (2211) is rotatable relative to the fixing base (211) between a first position with a minimum angle relative to the second canopy strip (2212) and a second position with a maximum angle relative to the second canopy strip (2212);
wherein the canopy (22) has a first side between the first canopy strip (2211) and the second canopy strip (2212);
wherein when the first canopy strip (2211) is at one of the first and second positions, the first side of the canopy (22) is retracted relative to the carrier body (1), and when the first canopy strip (2211) is at the other of the first and second positions, the first side of the canopy (22) is deployed relative to the carrier body (1); and
optionally wherein the canopy strip (221) further comprises a third canopy strip (2213), he fixing base body (2111) of the fixing base (211) is further provided with a third connecting portion (2116) extending in a direction away from the rotation axis (R), an extending direction of the second connecting portion (2115) is angled with an extending direction of the third connecting portion (2116), and the third canopy strip (2213) is detachably and rotatably connected to the third connecting portion (2116).

14. The canopy structure (2) according to claim 13, wherein the third canopy strip (2213) is rotatable relative to the fixing base (211) between a third position with a minimum angle relative to the second canopy strip (2212) and a fourth position with a maximum angle relative to the second canopy strip (2212);
wherein the canopy has a second side between the second canopy strip (2212) and the third canopy strip (2213);
wherein when the third canopy strip (2213) is at one of the third and fourth positions, the second side of the canopy (22) is retracted relative to the carrier body (1), and when the third canopy strip (2213) is at the other of the third and fourth positions, the second side of the canopy (22) is deployed relative to the carrier body (1); and
optionally wherein when the first canopy strip (2211) is at the second position, the first canopy strip (2211) is in the same plane as the frame tube (111) of the carrier body (1), and when the third canopy strip (2213) is at the fourth position, the third canopy strip (2213) is in the same plane as the frame tube (111) of the carrier body (1).

15. A child carrier comprising a carrier body (1) and a canopy structure (2) according to any one of claims 9 to 14, wherein the canopy structure (2) is connected to the carrier body (1).
